Europäisches Patentamt

European Patent Office

Office européen des brevets

(11) Numéro de publication : **0 062 293**
**B1**

(12) **FASCICULE DE BREVET EUROPÉEN**

(45) Date de publication du fascicule du brevet :
07.08.85

(51) Int. Cl.⁴ : **H 04 Q 11/04**, H 04 Q 3/54,
H 04 L 13/00

(21) Numéro de dépôt : 82102707.5

(22) Date de dépôt : 31.03.82

(54) Dispositif de commande multiprocesseur.

(30) Priorité : 03.04.81 FR 8106808

(43) Date de publication de la demande :
13.10.82 Bulletin 82/41

(45) Mention de la délivrance du brevet :
07.08.85 Bulletin 85/32

(84) Etats contractants désignés :
BE CH DE FR GB IT LI NL SE

(56) Documents cités :
FR-A- 2 430 158
IEEE PROCEEDINGS OF THE ANNUAL SYMPOSIUM
ON COMPUTER ARCHITECTURE, vol. 3, 19-21 janvier
1976, Long Beach, IEEE 1976, NEW YORK (US), L.C.
WIDDOES: "The minerva multimicroprocessor",
pages 34 - 39
INTERNATIONAL SWITCHING SYMPOSIUM, 11 mai
1979, PARIS (FR), F. ANCEAU et al.: "Projet d'architecture pour la commande d'un autocommutateur
téléphonique", pages 608-614

(73) Titulaire : **COMPAGNIE INDUSTRIELLE DES TELE-
COMMUNICATIONS CIT-ALCATEL S.A. dite:**
**12, rue de la Baume**
**F-75008 Paris (FR)**

(72) Inventeur : **Sauvajol, René**
**10, Impasse des Meuniers**
**F-78450 Villepreux (FR)**
Inventeur : **Bernoux, Jean-Pierre**
**8, Square D. Papin**
**F-78330 Fontenay-Le-Fleury (FR)**

(74) Mandataire : **Weinmiller, Jürgen et al**
**Zeppelinstrasse 63**
**D-8000 München 80 (DE)**

IEEE COMPUTER SOCIETY INTERNATIONAL CONFERENCE, Computer Technology to reach the people, San Francisco, 25-27 février 1975, Compcon 1975, NEW YORK (US), A. BAUM et al. : " Hardware Considerations in a Microcomputer Multiprocessing System ", pages 27-30

NACHRICHTENTECHNIK ELEKTRONIK, vol. 30, no. 6, juin 1980, BERLIN DE L'EST (DDR), W. WINTER : " Kopplung von Mikrorechnern über ein gemeinsames, zeitgeteilt benutztes Bussystem ", pages 224-228

INTERNATIONAL CONFERENCE ON COMMUNICATIONS, vol. 2, 4-7 juin 1978, IEEE, TORONTO (CA), C. CESARATTO et al. : " DMS-200 control structure ", pages 32.2.1-32.2.5

GEC JOURNAL OF SCIENCE & TECHNOLOGY, vol. 45, no. 3, 1979, COVENTRY (GB), J.C.D. NISSEN et al.: "A fault-tolerant multimicroprocessor for telecommunications and general applications", pages 116-122

INTERNATIONAL SWITCHING SYMPOSIUM, 11 mai 1979, PARIS (FR), O. ENOMOTO et al.: "Famille du PBX NEAX 12/22", pages 163-170

INTERNATIONAL SWITCHING SYMPOSIUM, 11 mai 1979, PARIS (FR), S. GIORCELLI: "Maintenabilité, fiabilité et modularité dans l'architecture des systèmes informatiques", pages 627-633

INTERNATIONAL SWITCHING SYMPOSIUM, 11 mai 1979, PARIS (FR), K. MAWATARI et al.: "Un système de commutation pour circuits de transmission de données avec architecture de commande distribuée", pages 267-274

INTERNATIONAL CONFERENCE ON COMMUNICATIONS, ICC'79 Conference Record, vol. 1 ou 4, 10-14 juin 1979, IEEE, BOSTON (US), J. OKUDA et al.: "New architecture for public digital telephone switching system", pages 12.2.1-12.2.5

INTERNATIONAL SWITCHING SYMPOSIUM, 21-25 septembre 1981, MONTREAL (CA), M. BALLARD et al.: "The E10.S-TSS.5. A multipurpose digital switching system", Session 14A, paper 1, pages 1-9

## Description

L'invention concerne un dispositif de commande multiprocesseur pour système complexe commandé par un ensemble de microprocesseurs, notamment pour autocommutateur à commande répartie.

L'invention est applicable dans les industries de l'électronique, des télécommunications et de la télématique.

Dans les dispositifs connus de type multiprocesseurs, les machines sont en général reliées à un bus commun qui leur permet de communiquer entre elles et de partager un certain nombre de ressources communes telles que mémoires, consoles, périphériques de stockage sur support magnétique. Tel est par exemple, le cas du système multiprocesseur décrit dans le document « IEEE Proceedings of the Annual Symposium on Computer Architecture », volume 3, 19-22 janvier 1976, pages 34 à 39, article de L.C. Widdoes « The Minerva Multimicroprocessor ». Ce document décrit un système multiprocesseur dans lequel les liaisons entre processeurs s'effectuent en multiplex à la demande par l'intermédiaire d'un unique bus trente deux bits auquel tous les processeurs sont reliés. Une unité de gestion dite d'arbitrage assure à la demande de réservation de tout ou partie du bus, en ce but processeur est relié à l'unité de gestion par une liaison individuelle de communication.

. les inconvénients d'un tel système sont que le bus commun n'a qu'une capacité limitée en nombre de processeurs, qu'il a une longueur limitée et qu'il est très vulnérable.

Le but de l'invention est de réaliser un type de liaison simple, donc facilement rendue très fiable, et capable de relier quelques dizaines de processeurs dialoguant en procédure sémaphore par exemple du type HDLC définie par le CCITT norme FSO.

Un autre but de l'invention est de banaliser le plus possible les processeurs et les interfaces pour réduire les contraintes d'implantation des logiciels et rendre aisées les reconfigurations en cas de panne.

Ces buts sont atteints par un dispositif de commande multiprocesseur, notamment un dispositif à commande répartie dans un ensemble de microprocesseurs munis de coupleurs de liaison à une liaison série de type canal sémaphore, géré par une unité de gestion des accès au réseau en fonction des demandes des microprocesseurs reliés en ce but à cette unité par des liaisons individuelles, caractérisé par le fait que la liaison série reliée en point à point à chacun des coupleurs est constituée en réseau d'échanges de messages ledit réseau d'échanges comportant un distributeur de gestion des accès au réseau et de supervision du réseau, et des liaisons reliées audit distributeur, ainsi que pour chaque microprocesseur qu'il dessert, des liaisons de demande et d'autorisation d'émission, des liaisons de transfert d'informations vers le distributeur et à partir du distributeur, une liaison de synchronisation, ainsi qu'un circuit de découplage à travers lequel les données reçues sur les liaisons de transfert sont réémises simultanément vers tous les microprocesseurs.

Un dispositif de commande selon le préambule de la revendication 1 est décrit dans le document cité Proceedings IEEE.

L'invention va être précisée par la description qui va suivre en liaison avec les figures répertoriées ci-dessous :

Figure 1   Diagramme général d'un autocommutateur à réseau de commutation temporelle selon l'invention.

Figure 2   Schéma général d'un réseau d'échanges selon l'invention entre des unités de commande et des marqueurs d'un réseau de connexion dans un autocommutateur temporel.

Figure 3   Schéma d'un marqueur et de ses accès au réseau.

Figure 4   Diagramme d'une unité de commande.

Figure 5   Diagramme d'une unité de commande gérant des périphériques informatiques.

Figure 6   Schéma d'un processeur.

Figure 7   Schéma d'un distributeur.

Figure 8   Schéma d'un coupleur de raccordement au réseau d'échange.

la description qui suit concerne une application de l'invention à la commande d'un autocommutateur temporel au moyen de microprocesseurs répartis dans des unités de commande et dans des marqueurs de commande du réseau de connexion de l'autocommutateur.

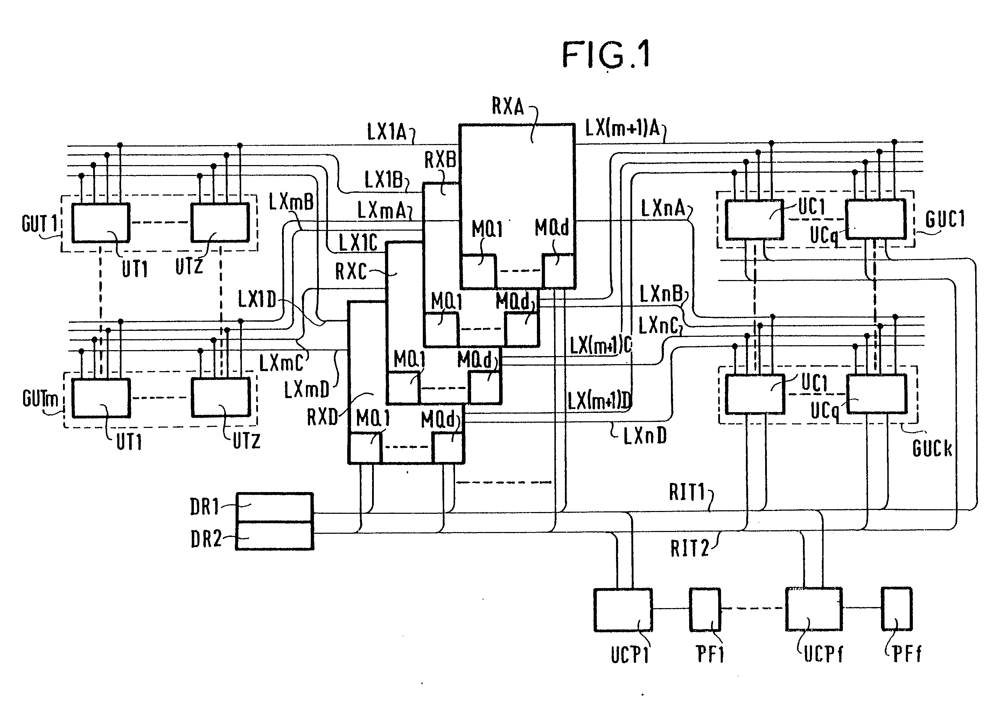

L'autocommutateur temporel représenté de manière simplifiée à la figure 1 et développé dans les demandes européennes EP-62295 et 62296 portant les mêmes dates de priorité et de dépôt que la présente demande, comporte :

— Des groupes d'unités de terminaux GuT1 à GuTm comportant des terminaux d'abonnés, des circuits analogiques et numériques, et des terminaux auxiliaires de signalisation, d'émission de tonalités et de films parlants, d'essais de lignes d'abonnés et de circuits, de circuits de conférence, etc...

— Un réseau de connexion central à un seul étage de commutation, organisé en plans indépendants, par exemple quatre plans RXA à RXD. Les chiffres donnés ici et dans la suite sont de simples exemples destinés à préciser un mode de réalisation ou à simplifier la représentation.

— Un ensemble de commande à architecture répartie formé de groupes GUC1 à GUCK d'unités de commandes UC identiques, par exemple des microprocesseurs. Les unités de commande proprement dites UC1 à UCq sont banalisées. L'ensemble de commande comporte également des unités UCP1 à UCPf qui gèrent des groupes de périphériques PF1 à PFf. Ces unités peuvent être identiques aux précédentes, mais elles ne sont pas banalisées complètement du fait de leur liaisons physiques avec les périphériques.

Les liaisons qui interconnectent ces trois ensembles sont les suivantes :

— Les unités de terminaux UT (UT1 à UTz) sont reliées à chaque plan RXA à RXD du réseau de connexion par une liaison multiplex LX telles LX1A à LXmD comportant 32 voies de 8 e.b., d'un débit de 2 M e. b/s dans chaque sens de transmission. Les unités de terminaux UT d'un même groupe sont reliées en parallèle aux mêmes liaisons multiplex LX.

— Les unités de commandes UC1 à UCq sont également reliées au réseau de connexion par des liaisons multiplex LX (m + 1) A à LXnD, à raison d'une liaison par groupe GUC vers chaque plan. Les messages échangés entre unités de commande et unités de terminaux empruntent des voies temporelles des liaisons LX, reliées par le réseau de connexion d'une manière semi-permanente et reconfigurable. On réalise ainsi des canaux de transmission de données d'un débit de 64 k e. b/s qui sont utilisés suivant une procédure dite HDLC définie par le CCITT norme ISO.

— Les unités de commande UC et UCP sont reliées entre elles par une liaison point à point doublée pour des raisons de sécurité RIT1, RIT2. Il s'agit d'une liaison série utilisant également une procédure HDLC. L'accès à la liaison est géré par un distributeur présenté dupliqué DR1, DR2 qui délivre les autorisations d'émission et supervise la durée d'utilisation.

La liaison comporte cinq paires de fils vers chaque station raccordée pour les fonctions d'appel, d'autorisation, d'horloge, d'émission et de réception.

Les liaisons entre les unités de commande UC et les unités de terminaux UT sont réalisées dans le réseau de connexion au moyen de connexions semi-permanentes établies entre les voies MIC.

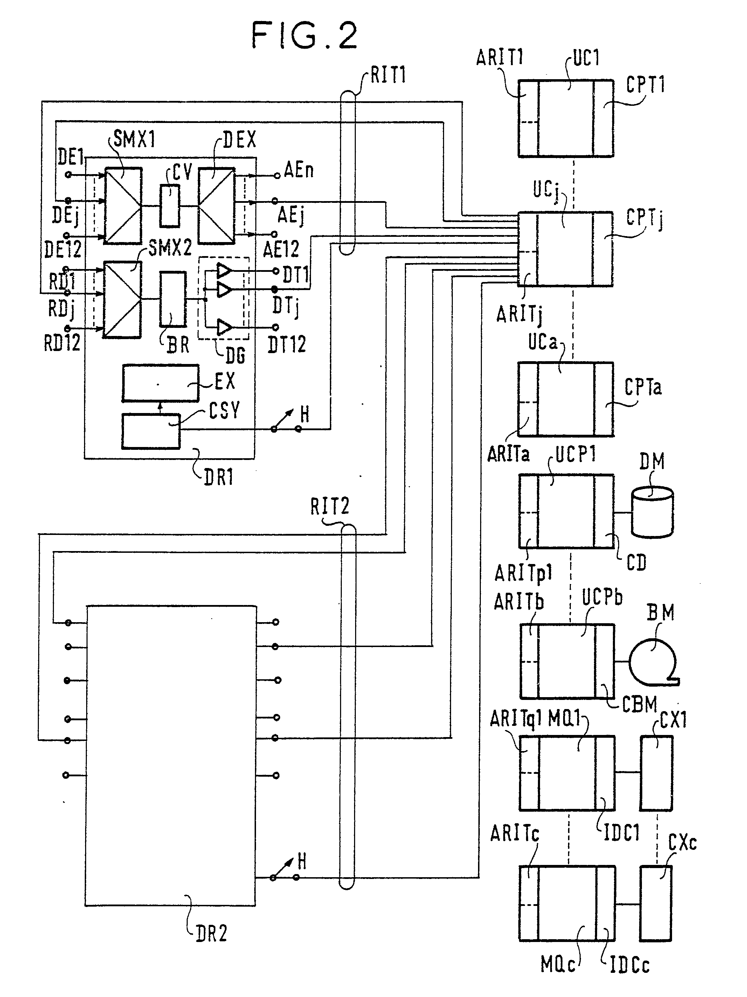

La figure 2 représente la structure du réseau d'échanges RIT1, RIT2, dont la duplication a conduit à celle du distributeur DR1, DR2.

La commande est répartie dans un ensemble de microprocesseurs qui sont tous reliés par un coupleur ARIT au réseau d'échanges RIT1, RIT2, tels les coupleurs ARIT1, ARITj, ARITa etc.

— Des unités de commandes UC1 à UCa sont reliées aux équipements téléphoniques, par des coupleurs appropriés CPT1 à CPTa ;

— des unités de commandes UCP1 à UCPb sont reliées à des coupleurs de périphériques CD, de disques DM et CBM de bande magnétique BM ;

— des marqueurs MQ1 à MQc de commande du réseau de connexion sont reliés chacun à un commutateur CX1 à CXc par une interface de couplage IDC1 à IDCc.

Le réseau d'échanges étant doublé les interfaces ARIT donnent accès aux deux liaisons RIT1 et RIT2 du réseau RIT qui sont gérées chacune par un distributeur DR1, DR2. Chaque distributeur gère « r » liaisons unitaires, avec $r = a + b + c$, comportant chacune les fils de demande DE1 à DE12, d'autorisation de prise AE1 à AE12, de réception RD1 à RD12, d'émission DT1 à DT12 et d'horloge (H).

Un distributeur DR1 comporte des sélecteurs SMX1, SMX2, DEX gérés par un explorateur EX, une interface de transmission DG permettant l'émission des données en parallèle vers tous les calculateurs, et un circuit de synchronisation CSY. Les demandes DE sont validées par un circuit CV. Les informations RD1 sont relayées par une bascule BR.

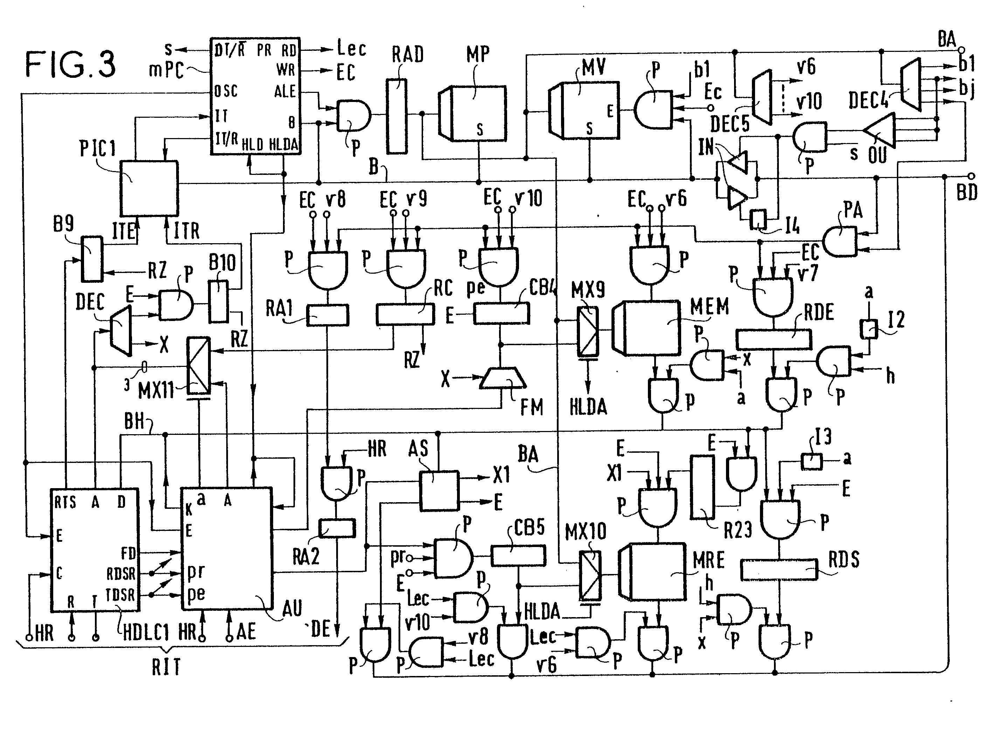

Un marqueur MQ1 et son accès au réseau RIT, sont représentés schématiquement sur la figure 3.

Le marqueur MQ1 comporte un microprocesseur mPC ; par exemple un circuit 8086 associé à un circuit d'horloge 8284 fabriqués par la société INTEL. Un bus interne B alimente le bus d'adresse BA par un registre d'adresse RAD, et un bus de données BD à travers une interface directionnelle IN contrôlée par le microprocesseur mPC (signal directionnel « s » issu de la sortie DT/R du microprocesseur, et adresse d'entrée-sortie reçues par une porte « OU » et un décodeur DEC4).

Le microprocesseur mPC est associé à une mémoire programme MP, par exemple de type « reprom » et une mémoire vive de données MV.

L'accès au réseau RIT comporte un circuit HDLC1 de gestion des échanges en procédure HDLC, un automate de pilotage AU et des mémoires tampons intermédiaires d'émission MEM et de réception MRE.

Le circuit HDLC est par exemple de type 6854 fabriqué par la société MOTOROLA.

L'automate AU est formé de manière connue par une logique en mémoire morte associée à un registre d'adresse qui reçoit les informations d'entrée, et à un registre de sortie, les deux registres étant pilotés par des signaux d'horloge fournis à l'entrée E par la sortie OSC du microprocesseur qui pilote également le circuit HDLC1. En entrée de l'organe d'accès, le bus BD est validé par une porte d'accès PA contrôlée par une adresse « bj » issue du décodeur DEC4.

Les accès du microprocesseur mPC comportent les commandes et les circuits suivants :

— utilisation des commandes « WR » et « RD » (fils EC et Lec) du microprocesseur, et d'un signal de sélection (v6 à v10) obtenu par décodage d'adresse par le décodeur DEC5 ;

— adressage multiplexé des mémoires MEM et MRE par le microprocesseur via le bus BA, par l'automate AU via les compteurs CB4, CB5, et les multiplexeurs MX9 et MX10 suivant le fonctionnement décrit plus loin.

— utilisation des circuits complémentaires suivants :

registre de données entrantes RDE connecté entre la porte PA et le bus BH du circuit HDLC1,

registre de données sortantes RDS entre les bus BH et BD,

registre tampon d'entrée R23 de la mémoire MRE,

registre de commande RC contenant des commandes de remises à zéro RZ des registres internes du circuit HDLC1 (entrée A correspondant au commandes R/W, RS0, RS1 du circuit 6854) fournies par l'intermédiaire d'un multiplexeur MX11 piloté par la sortie a de l'automate AU, le circuit HDLC1 peut ainsi être piloté soit par le microprocesseur, soit par l'automate ;

registres d'appel RA1, RA2 pour avoir accès à une liaison du réseau RIT, le microprocesseur charge le registre RA1, les signaux d'horloge HR de la liaison concernée du réseau RIT assurent le transfert de l'information dans le registre RA2 et le marquage du fil DE, l'autorisation d'émission en retour « AE » est reçue par l'automate AU ;

circuit de reconnaissance d'adresse d'unité de commande AS, cette adresse qui sert à identifier les unités de commande reliées au réseau RIT, est câblée dans ce circuit, elle est comparée, en réception, à l'adresse interne dans les messages, en émission, elle est intégrée au message ;

un circuit programmable PIC1 de gestion des interruptions du microprocesseur permet de prendre en compte les demandes de service de l'automate en émission et en réception. On utilise par exemple le circuit 8259 fabriqué par la société INTEL. En émission un signal d'interruption « ITE » est fourni directement par la sortie RTS du circuit HDLC1 via une bascule B9. En réception un signal d'interruption « ITR » est fourni par l'automate AU qui active une bascule B10. Ces bascules sont remises à zéro par le signal « RZ » fourni par le microprocesseur via le registre RC.

Le fonctionnement des circuits est le suivant :

En cas de demande d'émission par le microprocesseur mPC

— chargement de la mémoire MEM par le microprocesseur mPC, la mémoire peut contenir un message complet de n octets, l'adresse du dernier octet est chargée dans le compteur CB4,

— la mémoire est lue par le circuit HDLC1 sous contrôle de l'automate,

— le compteur CB4 est activé en mode dégressif sous le contrôle du signal prêt à émettre « pe » fourni par le circuit HDLC1 indiquant que son registre d'émission est vide,

— l'accès au bus BH en sortie de la mémoire est validé par l'automate dont les sorties a et A fournissent un code X de commande d'écriture du registre d'émission du circuit HDLC1,

— lorsque le compteur est revenu à zéro, un décodeur de fin de message FM avertit l'automate, et celui-ci pilote le circuit HDLC1 pour l'émission des codes de fin de message.

En cas de réception de messages sur une liaison du réseau RIT, la détection d'un début de message marque la sortie FD du circuit HDLC1 et prévient l'automate, celui-ci ordonne la lecture du registre de réception du circuit HDLC1, et le circuit AS reconnaît l'adresse de marqueur.

Pour chaque octet reçu, le circuit HDLC1 active sa sortie RDSR qui fournit un signal prêt à recevoir « pr ». Le signal « pr » valide l'entrée d'horloge du compteur CB5. L'automate commande la lecture du registre de réception du circuit HDLC1 et l'écriture de la mémoire MRE par un signal « X1 ».

L'automate fait appel au microprocesseur mPC. Plusieurs messages peuvent être mis en file d'attente dans la mémoire MRE.

Le microprocesseur vient lire le compteur CB5 et chacun des messages contenus dans la mémoire.

Chaque message donne lieu en retour à un message d'acquittement.

Le marqueur MQ1 exécute des ordres fournis par l'unité de commande UC à laquelle il est affecté. Certains donnent lieu à un message du compte-rendu, concernant l'établissement, la rupture et le contrôle des connexions établies par le commutateur CX1.

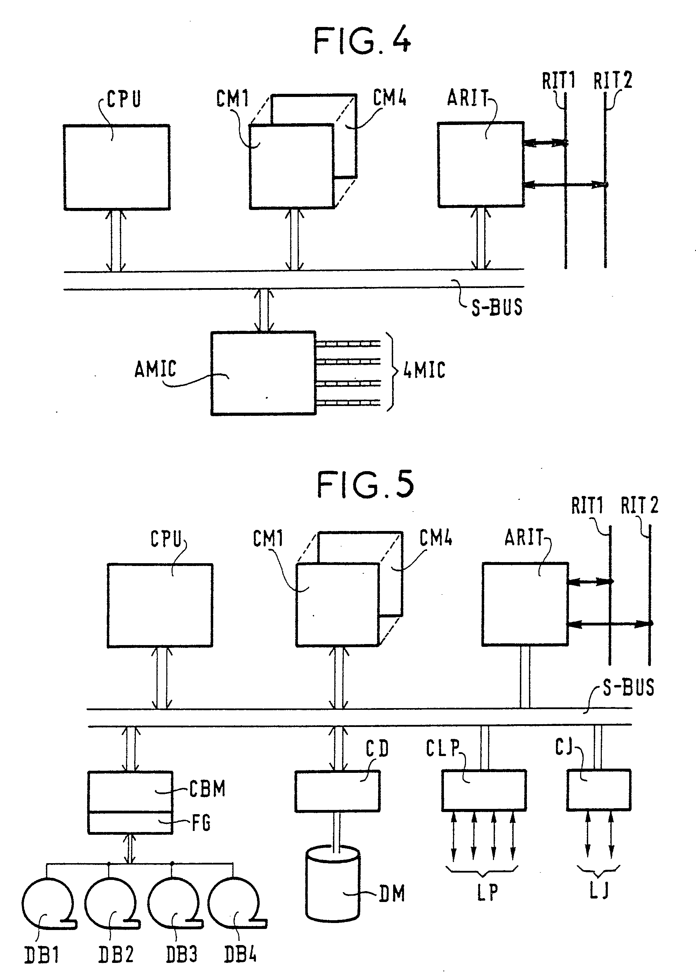

Une unité de commande UC1 est représentée schématiquement sur la figure 4.

Une unité UC comporte les organes suivants, reliés à un bus système S-BUS.

— Une carte processeur CPU.

— Des cartes mémoires telles CM1 à CM4.

— Une carte d'interface ARIT avec les liaisons RIT1-RIT2.

— Une carte d'interface AMIC avec des liaisons MIC qui desservent par exemple des unités de terminaux téléphoniques.

Les cartes CPU, ARIT, et le bus S-BUS sont décrits plus loin, ainsi que le distributeur DR1 qui gère l'accès à une liaison RIT1.

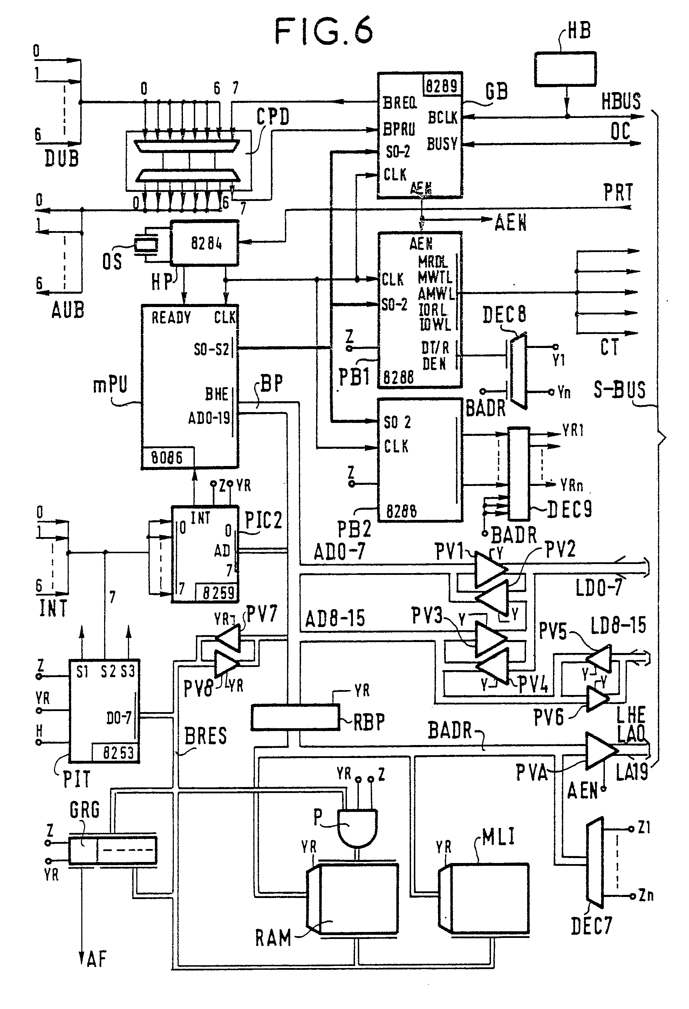

Une unité de commande de périphérique UCP représentée schématiquement sur la figure 5 a une architecture analogue à celle des unités de commande UC1, et elle comporte des coupleurs de périphériques tels que :

— coupleur de bandes magnétiques CBM associé à une logique de formatage FG qui pilote quatre dérouleurs DB1 à DB4,

— coupleur CD de disque DM,

— coupleur programmable de liaisons numériques CLP gérant par exemple quatre liaisons LP exploitables séparément en mode synchrone ou asynchrone,

— un coupleur CJ de liaisons LJ de type LX25 défini par le CCITT.

La carte processeur CPU et le bus système S-BUS sont détaillés sur la figure 6.

Un microprocesseur mPU a accès au bus système S-BUS et à un bus résident BRES pour la gestion des ressources implantées sur la carte CPU : Mémoire morte MLI contenant le logiciel d'initialisation, mémoire vive RAM, registres, temporisation.

Dans cette application, le microprocesseur mPU (figure 6) est constitué par un circuit 8086 de la société INTEL. On utilise également des circuits INTEL associés qui sont cités plus loin et repérés sur la figure, naturellement les circuits sont indiqués à simple titre d'exemple. Pour une appréciation claire de l'état de la technique, on pourra se reporter au document de la société INTEL « The 8086 family user's manual octobre 1979 », en particulier le chapitre concernant le bus système « Multibus ».

Les interfaces du bus processeur BP (Sorties AD0 à AD19 du circuit 8086) sont les suivantes :

— Un registre de bus RBP donne accès à un bus d'adresse BADR. Ce bus est relié aux entrées d'adressage des mémoires vive RAM et morte MLI, à un décodeur DEC7 qui fournit les adresses Z, telles Z1 à Zn, de validation des circuits de la carte, et à un groupe de portes de validation à sorties trois états PVA qui alimentent les lignes d'adresses LA0-LA19 du bus S-BUS.

— Des groupes de portes à sortie trois états PV1 à PV6 permettent l'accès à double sens des lignes de données LD0 à LD15 du bus S-BUS.

— PV1-PV2 accès AD0-7 et LD0-7,

— PV3-PV4 accès entre AD8-15 et LD0-7,

— PV5-PV6 accès entre AD8-15 et LD8-15, L'indication de l'octet (poids fort ou poids faible des données) émis ou reçu par les lignes LD0-7 est fournie par la sortie BHE du processeur, reliée au registre RBP et à la ligne LHE de S-BUS.

— L'accès au bus de données internes à seize fils (BRES) est réalisé par des groupes de portes trois états PV7, PV8.

Ce bus BRES donne accès aux circuits suivants :

— Mémoires RAM (entrée/sortie) et MLI (sortie).

— Groupe de registres GRG (entrées, et certaines en entrée/sortie notamment via un fil AF vers des afficheurs non représentés)

— Un compteur programmable triple PIT : par exemple un circuit type 8253 dont l'utilisation est la suivante :

Sortie S1 : contrôle de durée d'utilisation du S-BUS, provoque la libération en cas de dépassement.

Sortie S2 : crée les interruptions pour le marquage de l'heure.

Sortie S3 : compteur utilisé en compteur de durée.

— Les interruptions sont gérées par un circuit programmable PIC2 par exemple un circuit type 8259 qui reçoit les interruptions INT provenant du compteur PIT et des coupleurs (lignes INT0 à INT6). Le circuit PIC2 et des circuits analogues situés dans les couleurs fonctionnent en mode maître-esclave, le circuit PIC2 étant maître. Ce circuit est relié directement aux fils AD0 à AD7 du bus BP..

Pour la gestion des bus et des circuits de la carte processeur CPU :

— Les sorties S0 à S2 des liaisons de commande du microprocesseur mPU sont reliées à des circuits pilotes de bus PB1 et PB2 (type 8288) et à un circuit GB de gestion de l'accès au S-BUS (type 8289). L'horloge des circuits mPU, PB1, PB2, GB est fournie par un oscillateur OS et un circuit d'horloge HP (type 8284). Ce circuit reçoit le signal « prêt à transmettre » PRT des coupleurs reliés au bus S-BUS, et le synchronise avec l'horloge pour alimenter l'entrée « READY » du circuit mPU (8086). La sortie de validation « AEN » du circuit GB est reliée au circuit PB1 et aux portes PVA.

— Le circuit PB1 ici de type 8288, fournit :

les commandes d'écriture et lecture en modes accès mémoire ou entrée/sortie pour le bus S-BUS via les fils CT,

les commandes Y1 à Yn des groupes de portes PV1 à PV6 d'accès au bus S-BUS : les commandes Y sont données en sortie d'un décodeur DEC8 qui reçoit les sorties DT/R et DEN du circuit PB1, et le fil de poids faible du bus BADR,

Le circuit PB2 ici également de type 8288 fournit les commandes de validation internes YR, telles YR1 à YRn vers les circuits PIT, PIC2, PV7, PV8, RBP, RAM, MLI, GRG par l'intermédiaire d'un décodeur DEC9.

L'utilisation du bus S-BUS est partagée entre le microprocesseur mPU et des coupleurs, comme on le verra plus loin, par exemple pour un accès direct à la mémoire (mode « DMA »). Les signaux de gestion du bus S-BUS sont les suivants :

— Demandes DUB et autorisation AUB d'utilisation du bus : les liaisons sont en point à point sur les coupleurs et sont gérées par un circuit de codage à priorité et décodage CPD de la carte CPU. Ce circuit CPD reçoit sur ses entrées/sorties de priorité la plus grande (n° 7) les fils qui concernent le processeur fils « BREQ » et « BPRU » du circuit GB.

— L'horloge « H-BUS » du S-BUS est fournie par une horloge HB qui alimente aussi l'entrée BCLK du circuit GB.

— Le fil OC indiquant l'état d'occupation du bus est relié à la borne BUSY du circuit GB.

Dans cette application l'art connu a été utilisé puis adapté de manière à obtenir une grande rapidité et une simplicité de gestion dans les échanges interprocesseurs, en particulier en gérant les coupleurs comme des espaces mémoire et en traitant les informations de mise en relation et d'interruptions en mode point à point.

— Les coupleurs AMIC de liaisons MIC comportent des mémoires d'échange accessible pour le microprocesseur mPU.

— Les coupleurs ARIT des liaisons RIT1, RIT2 accède aux mémoires du système en mode DMA.

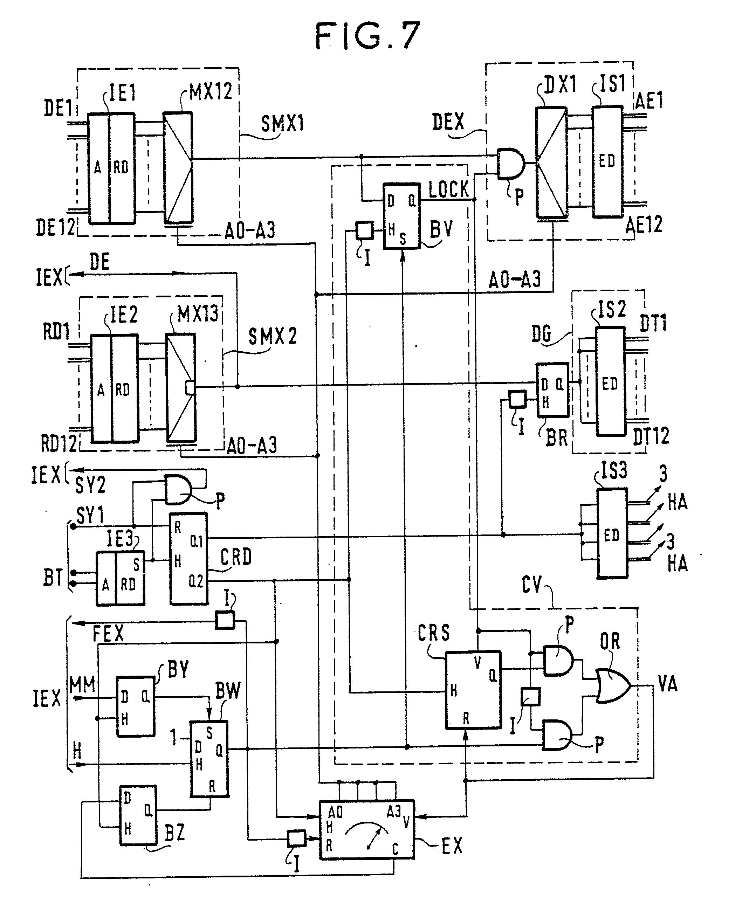

L'un des distributeurs de liaisons point à point DR1, DR2 est représenté schématiquement sur la figure 7.

Dans cette application de l'invention on utilise des distributeurs modulaires décrit ci-après.

Un module de distribution permet de raccorder douze unités UCB, UCP ou marqueurs MQ. Chaque unité ou marqueur est relié à chaque liaison RIT1, RIT2 du réseau RIT par cinq paires de fils ayant les fonctions suivantes :

— DE : demande d'accès au réseau dupliqué RIT1, RIT2,

— AE : autorisation d'accès,

— RD : données à transmettre (trajet station n vers les liaisons RIT1, RIT2 du réseau RIT),

— DT : données à transmettre (trajet RIT1, RIT2 vers station destinataire),

— HA : horloge de synchronisation.

Le module de distribution comporte des interfaces d'entrées IE1 à IE3 formées d'un adaptateur A et d'un récepteur différentiel RD, des interfaces de sortie IS1 à IS3 à émetteurs différentiels ED, et des liaisons d'extension IEX multifiliaires permettant de relier les modules entre eux.

Les interfaces d'entrées IE1, IE2, IE3 reçoivent respectivement les paires de liaisons de demandes d'accès DE1 à DE12 et de transmissions de données RD1 à RD12 pour douze unités ou marqueurs et des signaux d'une horloge à 4 MHz émise par la base de temps générale BT de l'ensemble.

Les interfaces de sortie IS1, IS2 desservent les liaisons d'autorisation d'accès AE1 à AE12 et de transmission de données DT1 à DT12. L'interface IS3 alimente quatre paires de fils de distribution d'horloge HA qui desservent chacune trois stations en parallèle. Les liaisons DE1 à DE12, AE1 à AE12, RD1 à RD12 sont validées séquentiellement par un compteur explorateur EX qui adresse des multiplexeurs MX12 et MX13 et un démultiplexeur DX1 (adresses A0 à A3).

Les données « DT » et l'horloge « HA » sont émises simultanément vers toutes les unités UC, UCP, MQ. Le signal « HA » a une fréquence de 1 MHz obtenue par division des signaux de l'horloge de base BT par un compteur CRD. L'horloge de base émet également un signal de synchronisation de trame SY1 transmis à l'entrée de remise à zéro du compteur CRD. Le signal SY1 du premier module est renvoyé au travers d'une porte P et via le fil SY2 de liaison IEX vers l'entrée SY1 des autres modules en série.

La prise de la liaison par une unité UC, UCP ou MQ est mémorisée par une bascule de validation BV qui délivre un signal LOCK lequel arrête l'explorateur EX par l'intermédiaire du compteur CRS et ouvre l'accès au démultiplexeur DX1 qui donne l'autorisation d'émission AE.

Les données reçues des fils RS sont régénérées par une bascule BR. Les données reçues par un module peuvent être émises vers une unité raccordée à un module quelconque. Le multiplexeur MX13 a une sortie 3 états multipliée via le fil DE de liaison IEX avec celle des autres modules.

La durée de prise d'une liaison du réseau par une unité ou marqueur est limitée à 10 ms par le compteur de surveillance CRS qui autorise par un signal VA, et via une logique câblée à porte P, I, OR, la progression de l'explorateur EX dans le cas de dépassement de durée.

Une sortie Q2 du compteur CRD fournit des signaux d'horloge aux circuits EX, CRS et BV, en opposition de phase pour ce dernier. Les signaux d'horloge d'émission fournis par la sortie Q1 du compteur CRD activent via un inverseur de phase I la bascule de régénération BR, à la fréquence de 1 MHz...

Le fonctionnement du distributeur dupliqué DR1, DR2 est le suivant :

— Mise en marche : le premier module du distributeur reçoit un signal MM sur une bascule BY pilotée par la sortie Q2 du compteur CRD. La sortie Q de la bascule BY positionne une bascule d'autorisation BW qui libère l'explorateur EX.

Prise en compte d'une demande d'émission DE1 : lorsque l'explorateur EX adresse l'entrée correspondante de l'interface IE1, la bascule BV délivre le signal LOCK qui a trois actions.

Ouverture de la porte P d'accès au démultiplexeur DX1 et émission de l'autorisation AE1.

Autorisation de progression du compteur de surveillance CRS.

Blocage de l'explorateur EX (fermeture de la porte P).

— Fin d'émission : suppression du signal DE1 avant 10 ms, qui entraine la remise à zéro des signaux AE1 et LOCK et du compteur CRS, et le déblocage de l'explorateur EX.

— Fin de temporisation avant une fin d'émission : la sortie du compteur CRS ouvre la porte P qui débloque l'explorateur EX.

— Fin d'exploration : la sortie de fin de comptage C de l'exploration EX est reliée à l'entrée D d'une bascule BZ qui commande la remise à zéro de la bascule BW. Celle-ci commande, par l'intermédiaire du fil FEX de liaison IEX l'entrée d'horloge H de la bascule BW du module suivant. En fin d'exploration de tous les modules, le cycle recommence.

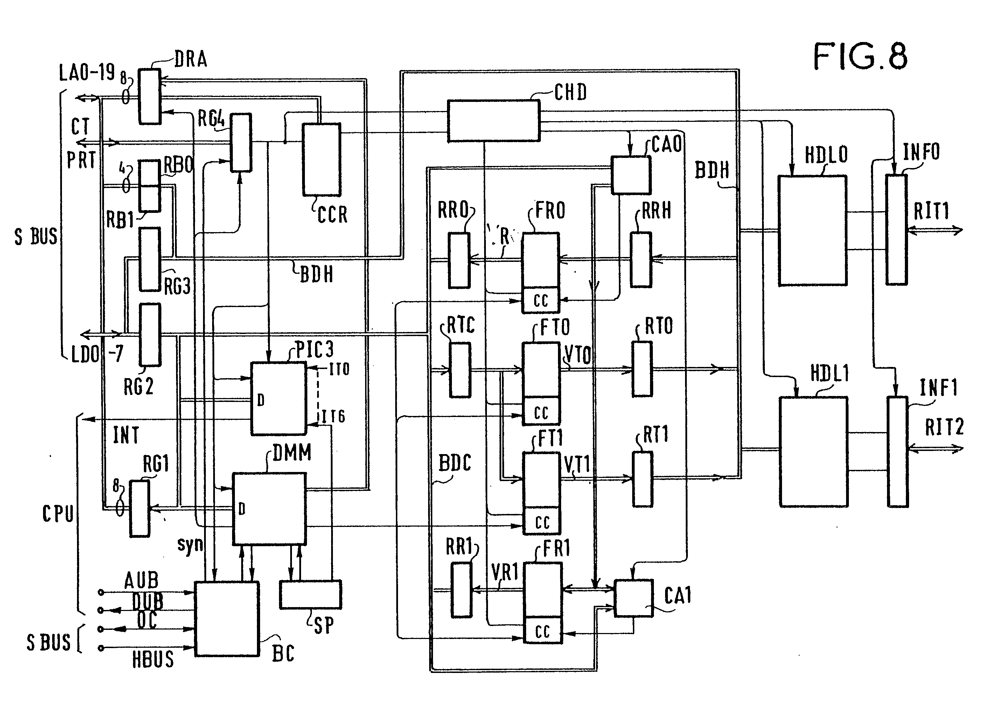

Le coupleur ARIT de liaison aux réseaux RIT décrit à titre d'exemple figure 8 est un dispositif de dialogue interprocesseurs. Il occupe une carte de circuits imprimés, logée dans l'alvéole du processeur. Ce dispositif est relié d'une part au bus S-BUS du processeur pour un échange de messages par procédure d'accès direct à la mémoire et d'autre part aux liaisons RIT1, RIT2 du réseau de dialogue RIT pour un dialogue en procédure HDLC, du même type que celui qui a été décrit plus haut dans le cas des marqueurs.

Le dispositif suivant l'invention permet un accès simultané aux deux liaisons RIT1 et RIT2 du réseau RIT et des opérations simultanées de transfert par des circuits d'accès direct en mémoire DMM, et de gestion des échanges HDL0 et HDL1, définis plus loin.

Pour cela le dispositif comporte quatre voies internes, et à chaque voie est associé un registre de stockage de type FIFO d'une capacité de 64 octets tel le registre FR0 à la voie de réception VR0 associée à la liaison RIT1, le registre FR1 à la voie de réception VR1 associée à la liaison RIT2, le registre FT0 à la voie d'émission VT0 assurée à la liaison RIT1 et le registre FT1 à la voie d'émission VT1 assurée à la liaison RIT2.

Ces voies accèdent aux circuits d'échanges avec le processeur, à un bus interne BDC, et aux circuits HDL0, HDL1 par un bus BDH.

Les transferts entre chaque registre FR ou FT et les bus BDC, BDH sont synchronisés à l'aide de registre tampons d'émission RTC, RT0, RT1 et réception RRH, RR0, RR1.

En émission et réception, on a une procédure générale d'échange.

En émission, le processeur active les circuits DMM et HDL0 et fournit le signal « DE0 » de demande de prise d'une liaison tel RIT1 du réseau RIT. Après réponse « AE0 » du RIT1 le circuit DMM commence le transfert depuis la mémoire du processeur vers le registre FT0 de la voie VT0 par paquets de seize octets, jusqu'à remplissage du registre. Le circuit HDL0 commence la transmission dès que le premier octet est disponible, jusqu'à ce que le circuit DMM indique la fin de message et que le registre soit vide. Le circuit HDL0 termine le message. Le réseau RIT1 est libéré et une interruption est émise vers le processeur qui peut lire le registre d'état du circuit HDL0.

Les différentes interruptions sont gérées sur la carte par un circuit programmable PIC3, par exemple le circuit 8259A fabriqué par la société INTEL. Ce circuit est piloté par le circuit 8259A du calculateur en mode maître-esclave. Le dialogue a lieu par interruption « INT » et accusé de réception « INTA », soit par exploration des circuits esclaves par le circuit maître.

En réception, le processeur active le circuit DMM et le récepteur du circuit HDL0. Après détection d'un « FLAG », l'octet qui suit est comparé à l'adresse du dispositif. S'il y a concordance, seize octets sont chargés dans le registre de la voie VR0, et une demande de service est émise vers le circuit DMM. Une nouvelle demande est émise à chaque paquet de seize octets, jusqu'à la fin du message « FLAG » de fin, lorsque le registre FR0 est vide. Le récepteur est désactivé et une interruption est émise vers le microprocesseur pour lecture du registre d'état de circuit HDL0, et du registre du circuit DMM indiquant la longueur du message et son adresse en mémoire.

Le processeur supervise l'accès DMM pour le transfert des paquets de 16 octets, mais le circuit DMM gère seul le transfert de chaque paquet, et pendant ces transferts le bus S-BUS est piloté par lui.

Le dispositif est considéré par le proceseur comme un espace mémoire et les seules commandes utilisées, mise à part la gestion de l'accès DMM sont les commandes de lecture Lec et d'écriture EC et la réponse du dispositif adressé c'est-à-dire un signal « prêt » émis sur le fil PRT du S-BUS défini plus haut.

Les circuits du dispositif mentionné ci-dessus sont une interface avec le bus S-BUS pour des lignes d'adresse LA0 à LA19, des lignes de donées LD0 à LD7 et des lignes de commande de transfert CT et PRT et de commande de contrôle du bus S-BUS. Les huit lignes d'adresse de poids faibles (LA0 à LA7) sont reliées à un circuit d'accès bidirectionnel ou « driver » DRA. Pendant les transferts vers la mémoire du microprocesseur en mode d'accès direct, ces lignes sont alimentées par le circuit DMM.

Les lignes LA8 à LA15, sont alimentées en mode d'accès direct par le circuit DMM à travers un registre de sortie RG1. En entrée ces lignes sont reliées aux circuits destinataires.

Les lignes LA16 à LA19, sont alimentées par deux registres d'adresse de bloc RB0, RB1 associés chacun à l'un des réseaux RIT. Les registres sont chargés par le processeur par l'intermédiaire du bus de données et indiquent le bloc de 64 K/octets de la mémoire dans lequel doit être stocké le message reçu. En émission, le circuit DMM lit le message dans le bloc dont l'adresse de base est égale à zéro. L'utilisation interne des lignes par le dispositif est décrite plus loin. Seules huit des lignes de donées (LD0 à LD7) sont utilisées. Elles sont reliées par des registres bidirectionnels RG2 et RG3 aux bus internes BDC et BDH. Le sens de transfert est commandé par le circuit DMM.

Les lignes de commande de transfert CT et PRT, soit en entrée les commandes de lecture/écriture sont relayées par un registre RG4 qui permet leur synchronisation par un signal « syn » émis par un circuit de contrôle de bus BC.

En sortie les signaux sont fournis par le circuit DMM. Le signal « PRT » est également émis par le circuit BC à partir du signal « syn ». Les lignes de commande de contrôle du bus S-BUS par le circuit BC comprennent les fils permettant la prise et la délibération du bus qui sont le fil HBUS d'horloge de synchronisation du bus, le fil DUB de demande d'utilisation du bus par le circuit DMM et le fil AUB d'autorisation d'utilisation du bus, celle-ci étant donnée par le processeur.

Le circuit BC effectue un simple relayage de ces signaux et leur synchronisation avec l'horloge du bus.

Les circuits du dispositif comprennent aussi un circuit de contrôle CCR.

Ce circuit décode les informations des lignes d'adresse LA et CT pour la commande des circuits du dispositif.

Le processeur utilise pour cette commande 64 mots mémoire, dans un bloc de 16 koctets identifié par câblage sur le connecteur de la carte du dispositif. Ces 64 mots sont adressés par les 6 e. b. de poids faibles des lignes LA. Les 4 e. b. LA0 à LA3 définissent la commande et les e. b. LA4-LA5 le cicuit adressé.

Le circuit d'accès direct DMM à la mémoire est ici un circuit programmable 8257 fabriqué par INTEL. Ce circuit peut contrôler quatre voies différentes, et il est utilisé pour le transfert de paquets de un à seize octets.

A ce circuit sont associés un registre tampon RTC d'émission vers les registres FT0 à FT1 des voies VT0 et VT1, les registres tampons de réception RR0 et RR1 reliés aux registres FR0, FR1 des voies VR0 et VR1, et un circuit de supervision SP de la durée de prise du bus S-BUS.

Le circuit SP comporte des compteurs qui mesurent la durée de l'accès mémoire, contrôlée par la présence du signal « PRT », et le nombre de caractères transmis, qui ne doit pas dépasser seize avant libération du bus. En cas de dépassement, le circuit SP émet une demande d'interruption vers le circuit PIC3. Pour les transferts émission et réception les registres FR0, FR1, FT0, FT1 des quatre voies comportent chacun un circuit de contrôle CC formé d'un compteur qui délivre les informations registre vide, seize caractères chargés, registre plein, nécessaires pour initialiser et stopper les transferts.

Le transfert vers le processeur en mode d'accès direct, c'est-à-dire l'écriture en mémoire, est initialisé par le circuit DMM qui effectue une demande de données par la sortie D-RE0 du boîtier 8257. Pour la voie VR0, par exemple, le transfert entre FR0 et DMM débute lorsque le circuit CC indique que le registre est plein. Le circuit DMM pilote le transfert jusqu'à réception du signal « registre vide » ou du signal « fin de message » activé lorsque le circuit HDL0 a détecté le caractère indicatif de fin « FLAG ».

Le transfert depuis le processeur en mode d'accès direct s'effectue par initialisation par le circuit DMM, et transfert jusqu'à remplissage du registre FT0 ou jusqu'au signal de fin de transfert donné cette fois par le circuit DMM.

Les interruptions gérées par le circuit PIC3 sont respectivement pour les voies associées aux réseaux RIT1 et RIT2
— l'interruption de fin de transfert de paquet (IT0) (IT3),
— l'interruption de fin de réception de message (IT1) (IT4),
— et l'interruption de fin d'émission de message (IT2) (IT5) ;
pour le circuit SP c'est l'interruption de cas de dépassement de durée d'utilisation du bus (IT6).

Les circuits d'émission-réception HDL0-HDL1 sont de même type que le circuit HDLC1, ils sont reliés à leur réseau RIT par une interface INF0, INF1 de conversion électrique et de relayage des signaux de demande et d'autorisation d'émission AE et DE. Les commandes de pilotage des circuits HDL sont fournies par un circuit de contrôle CHD, relié aux circuits CCR, RG4, CA, HDL, INF. Le circuit CHD comporte, pour chaque circuit HDL un multiplexeur d'aiguillage des commandes de ses registres internes qui a des fonctions analogues à celles du multiplexeur MX11 (figure 3). Le circuit CHD peut être réalisé sous forme d'une logique câblée, ou sous forme d'une mémoire de type PROM avec des fonctions comparables à celles de l'automate décrit précédemment.

Le circuit CHD est également relié à deux circuits CA0 et CA1 de reconnaissance d'adresse d'unités ou de marqueurs qui sont chargés via le bus BDC par un ordre du microprocesseur mPU et reçoivent l'adresse contenue dans le message sur la voie réception en sortie du tampon RRH. Le fonctionnement des échanges entre circuits HDL et registres FT est le suivant, en cas d'émission sur le réseau RIT.

Après la prise d'une liaison telle RIT1 et le positionnement en émission des circuits DMM et HDL0 par le processeur, le transfert d'un caractère entre registre FT0 et circuit HDL0 par l'intermédiaire du tampon RT0 est déclenché lorsque le circuit CC du registre FT0 indique qu'un caractère est disponible en sortie de ce registre FT0 ou que le circuit HDL0 est prêt à émettre ce qui est indiqué par l'activation de sa sortie TDSR.

Les caractères sont transmis sous le contrôle du circuit CHD jusqu'à la fin du message, indiquée par les signaux « fin de message » donné par DMM et « registre vide » donné par le circuit CC concerné. En cas de réception sur le réseau RIT0 après positionnement des circuits HDL0 et DMM, le transfert du premier caractère est déclenché lorsque le circuit HDL0 est prêt à recevoir ce qui est indiqué par l'activation de sa sortie RDSR, et que le tampon registre RRH est disponible, la voie de réception VR n'étant pas active.

Le premier caractère est comparé à l'adresse chargée par le processeur dans le circuit de reconnaissance CA, pour reconnaissance de l'unité ou marqueur destinataire avant transfert des caractères suivants.

Si la comparaison n'est pas validée, une seconde comparaison est faite avec un caractère fixe, le même pour toutes les unités ou marqueurs (par exemple FF en hexadécimal). Cette procédure permet à un processeur de diffuser un message vers toutes les unités ou marqueurs raccordés au réseau RIT.

D'autre part, la présence de deux circuits de comparaison CA0-CA1 permet d'avoir une adresse d'unité ou de marqueur différente pour les adresses RIT.

La procédure de fin de message est déclenchée lorsque le circuit HDL0 détecte le signal « FLAG » de fin.

Comme on l'a indiqué plus haut, les circuits du dispositif sont pilotés par le processeur à l'aide des informations suivantes :
— Adresses de 0 à 64 données par LA0 à LA5,
— Signaux de lecture/écriture via les fils CT,
— Données sur les fils LD0 à LD7.

Les principales commandes utilisées sont indiquées à titre d'exemple pour les circuits PIC3 c'est une utilisation normale des commandes CT reliées aux entrées T/W du circuit 8259A pour la lecture ou l'écriture des registres internes du circuit.

Pour les registres RB1, RB2 de base, le chargement des informations « D0 à D3 » s'effectue par une commande d'écriture.

Pour les adresses d'unité ou de marqueurs au niveau de circuits CA0, CA1 le chargement des informations « D0 à D7 » s'effectue par une commande d'écriture.

Pour le circuit d'accès DMM, l'écriture et la lecture de l'adresse mémoire pour l'accès est constituée de deux octets consécutifs qui sont lus ou écrits sur les fils D0 à D7.

L'écriture ou la lecture de l'index qui permet le comptage des octets transmis est de seize e. b. ou deux octets consécutifs.

Ces commandes sont réalisées séparément pour chacune des quatre voies traitées par le circuit DMM.

Le processeur commande également les registres communs aux quatre voies pour la lecture du registre d'état, et l'écriture du registre de commande, du masque, etc...

Pour les circuits HDL0-HDL1, on a écriture séparée des registres de contrôle, et lecture séparée des deux registres d'état.

**Revendications**

1. Dispositif de commande multiprocesseur, notamment de commande répartie dans un ensemble de microprocesseurs munis de coupleurs de liaison à une liaison série de type canal sémaphore, géré par une unité de gestion des accès au réseau en fonction des demandes des microprocesseurs reliés en ce but à cette unité par des liaisons individuelles, caractérisé par le fait que la liaison série reliée en point à point à chacun des coupleurs (ARIT) est constituée en réseau d'échanges de messages (RIT1) ledit réseau d'échanges (RIT1) comportant un distributeur (DR1) de gestion des accès au réseau et de supervision du réseau, et des liaisons reliées audit distributeur (DR1), ainsi que pour chaque microprocesseur qu'il dessert, des liaisons de demande (DE1) et d'autorisation (AE1) d'émission, des liaisons de transfert d'informations (RD1) vers le distributeur et à partir du distributeur (DT1), une liaison de synchronisation (H), ainsi qu'un circuit de découplage (DG) à travers lequel les données reçues sur les liaisons de transfert (RD1) sont réémises simultanément vers tous les microprocesseurs.

2. Dispositif de commande suivant la revendication 1, caractérisé par le fait que le distributeur comporte :
— des sélecteurs (SMX1, SMX2, DEX) d'accès pour les fils de demande (DE1), aux fils d'autorisation (AE1) et pour les fils de transfert (RD1),
— un circuit d'exploration (EX) pilotant les sélecteurs,
— un circuit de synchronisation (CSY),
— un circuit de validation (CV) des demandes (DE1),
— une bascule (BR) de régénération des informations transmises à travers le distributeur,
— un dispositif de contrôle de durée de prise (CRS).

3. Dispositif suivant la revendication 2, caractérisé par le fait que la capacité du distributeur peut être augmentée par association de plusieurs distributeurs, les explorateurs (EX) étant reliés en série, et les sélecteurs (SMX2) d'accès pour fils de transfert (RD1) ayant leurs sorties multiplexées.

4. Dispositif suivant la revendication 1, caractérisé par le fait que chaque coupleur (ARIT) audit réseau d'échanges comporte :
— une interface de liaison au bus de processeur (S-BUS), composée de registres bidirectionnels (RG1 à RG4, RB0, RB1, DRA) et d'un circuit de contrôle (CCR), décodant les informations d'adresse,
— un circuit de pilotage composée d'un circuit (BC) de contrôle de bus et d'un circuit (DMM) d'accès direct à la mémoire du microprocesseur (mPU),
— au moins un circuit d'émission-réception (HDL) relié au réseau d'échange (RIT) et commandé par le processeur (mPU),
— des registres tampons d'émission (RTC, RT0, FT0) et de réception (RRH, FR0, RR0),
— un circuit de contrôle (CHD).

5. Dispositif de commande suivant la revendication 4, caractérisé par le fait que le coupleur comporte deux bus interne indépendants (BDC, BDH) pour effectuer des échanges de données simultanément sur le bus processeur (S-BUS) et sur le réseau d'échanges (RIT1), le bus (BDC) reliant le circuit d'accès direct (DMM), l'interface de liaison et les registres tampons, le bus (BDH) reliant le circuit d'émission/réception (HDL), les registres d'adresse de bloc (RB0, RB1) le registre (RG3), les registres tampons et des circuits de comptage (CC) associés aux registres tampons de stockage (FR, FT) permettant la gestion des échanges par blocs de caractères.

6. Dispositif suivant la revendication 5, caractérisé par le fait qu'il comporte :
— deux circuits d'émission/réception (HDL0, HDL1) respectivement asociés chacun à une liaison du réseau dupliqué RIT,
— deux groupes de registres tampons d'émission (FT0, FT1, RT0, RT1),
— deux groupes de registres tampons de réception (FR0, FR1, RR0, RR1),
— un circuit de pilotage (DM) capable de gérer plusieurs voies indépendantes, le dispositif gérant deux voies d'émission (VT0, VT1) et deux voies de réception (VR0, VR1) indépendantes.

## Claims

1. A multiprocessor control device, in particular of the distributed control type in a system of microprocessors having link couplers for coupling it to a semaphore type serial link, which is managed by an access management unit to the network as a function of the requests of the microprocessors connected to this end to this unit through individual links, characterized in that the serial link connected for point to point communication to each one of said couplers (ARIT) is constituted by a message exchange network (RIT1) comprising a distributor (DR1) for managing the access to the networks and for supervising the network, and links connected to said distributor (DR1), as well as for each microprocessor associated thereto, request links (DE1) and send authorization links (AE1), links for transferring informations (RD1) to the distributor and from the distributor (DT1), a synchronization link (H) as well as a decoupling circuit (DG) through which the data received of the transfer links (RD1) are relayed simultaneously to all the microprocessors.

2. A control device according to claim 1, characterized in that the distributor comprises :
— access selectors (SMX1, SMX2, DEX) for the request wires (DE1), to the authorization wires (AE1) and for the transfer wires (RD1),
— an exploration circuit (EX) for controlling the selectors,
— a synchronization circuit (CSY),
— a circuit (CV) for enabling the requests (DE1),
— a bistable flip-flop (BR) for regenerating the informations transmitted through the distributor,
— a control device for controlling the duration of occupation (CRS).

3. A device according to claim 2, characterized in that the capacity of the distributor can be increased by association of several distributors, the explorators (EX) being connected in series and the access selectors (SMX2) for the transfer wires (RD1) having multiplexed outputs.

4. A device according to claim 1, characterized in that each coupler (ARIT) to said exchange network comprises :
— an interface in the connection to the processor bus (S-BUS) composed of bidirectional registers (RG1 to RG4, RB0, RB1, DRA) and of a control circuit (CCR) for decoding the address informations,
— a control circuit composed of a bus control circuit (BC) and of a circuit (DMM) giving direct access to the memory of the microprocessor (mPU),
— at least one send-receipt-circuit (HDL) connected to the exchange network (RIT) and controlled by the processor (mPU),
— buffer registers for sending (RTC, RT0, FT0) and for receiving (RRH, FR0, RR0),
— a control circuit (CHD).

5. A control device according to claim 4, characterized in that the coupler comprises two independent internal busses (BDC, BDH) for simultaneously performing data exchanges on the processor bus (S-BUS) and on the excange network (RIT1), the bus (BDC) connecting the direct access circuit (DMM), the link interface and the buffer registers, the bus (BDH) connecting the send-receipt-circuit (HDL), the block address registers (RB0, RB1), the register (RG3), the buffer registers and count circuits (CC) which are associated to the memory buffer registers (FR, FT) and are conceived to manage the data exchanges by blocks of characters.

6. A device according to claim 5, characterized in that it comprises :
— two send-receipt-circuits (HDL0, HDL1), each one associated to one link of the duplicated network (RIT),
— two groups of send buffer registers (FT0, FT1, RT0, RT1),
— two groups of receipt buffer registers (FR0, FR1, RR0, RR1),
— a control circuit (DM), which is able to manage a plurality of independent channels, the device managing two independent send channels (VT0, VT1) and two independent receipt channels (VR0, VR1).

**Patentansprüche**

1. Vorrichtung zur Multiprozessorsteuerung, insbesondere mit verteilter Steuerung in einem System von Mikroprozessoren, die Koppler zum Anschluß an eine Serienverbindung vom Semaphorkanaltyp aufweisen, die von einer Einheit zur Verwaltung der Zugriffe zum Netz abhängig von den Anforderungen der Mikroprozessoren gesteuert wird, wobei diese Prozessoren zu diesem Zweck an die Einheit über individuelle Verbindungen angeschlossen sind, dadurch gekennzeichnet, daß die Serienverbindung, die von Punkt zu Punkt an jeden der Koppler (ARIT) angeschlossen ist, als Nachrichtenaustauschnetz (RIT1) ausgebildet ist, das einen Verteiler (DR1) der Netzzugriffsverwaltung und der Netzüberwachung besitzt und Verbindungen zu diesem Verteiler, sowie für jeden von ihr bedienten Mikroprozessor Sende-Anforderungs- (DE1) und Sende-Genehmigungsleitungen (AE1), Leitungen zur Informationsübertragung (RD1) zum und vom Verteiler (DT1), eine Synchronisationsleitung (H) sowie einen Entkopplungskreis (DG) aufweist, durch den die auf den Übertragungsleitungen (RD1) empfangenen Daten wieder gleichzeitig an alle Mikroprozessoren ausgesandt werden.

2. Steuervorrichtung nach Anspruch 1, dadurch gekennzeichnet, daß der Verteiler aufweist :
— Zugriffswähler (SMX1, SMX2, DEX) für die Anforderungsdrähte (DE1), auf die Genehmigungsdrähte (AE1) und für die Übertragungsdrähte (RD1),
— einen Abfragekreis (EX), der die Wähler steuert,
— einen Synchronisationskreis (CSY),
— einen Durchschaltekreis (CV) für die Anforderungen (DE1),
— eine Kippstufe (BR) für die Regeneration der über den Verteiler übertragenen Informationen,
— eine Vorrichtung zur Kontrolle der Belegungsdauer (CRS).

3. Vorrichtung nach Anspruch 2, dadurch gekennzeichnet, daß die Kapazität des Verteilers durch Verwendung mehrerer Verteiler erhöht werden kann, wobei die Abfragekreise (EX) in Reihe verbunden sind und die Ausgänge der Zugriffswähler (SMX2) für die Übertragungsdrähte (RD1) multiplixiert sind.

4. Vorrichtung nach Anspruch 1, dadurch gekennzeichnet, daß jeder Koppler (ARIT) des Austauschnetzes aufweist :
— ein Verbindungs-Interface zur Prozessorschiene (S-BUS), bestehend aus bidirektionalen Registern (RG1 bis RG4, RB0, RB1, DRA) und einem Kontrollkreis (CCR), der die Adresseninformationen dekodiert,
— einen aus einem Schienensteuerschaltkreis (BC) und einem Direkt-Zugriffsschaltkreis (DMM) zum Speicher des Mikroprozessors (mPU) bestehenden Steuerschaltkreis,
— mindestens einen Sende-Empfangs-Schaltkreis (HDL), der an das Austauschnetz (RIT) angeschlossen ist und vom Prozessor (mPU) gesteuert wird,
— Sendepufferregister (RTC, RT0, FT0) und Empfangspufferregister (RRH, FR0, RR0),
— einen Steuerschaltkreis (CHD).

5. Steuevorrichtung nach Anspruch 4, dadurch gekenzeichnet, daß der Koppler zwei unabhängige interne Schienen (BDC, BDH) besitzt, um gleichzeitig Datenaustauschvorgänge auf der Prozessorschiene (S-BUS) und dem Austauschnetz (RIT1) durchzuführen, wobei die Schiene (BDC) den Direkt-Zugriffskreis (DMM), das Verbindungs-Interface und die Pufferregister verbindet, während die Schiene (BDH) den Sende-Empfangskreis (HDL), die Blockadressenregister (RB0, RB1), das Register (RG3), die Pufferregister und Zählschaltkreise (CC) verbindet, die den Speicherpufferregistern (FR, FT) zugeordnet sind und die Behandlung der Austauschvorgänge in form von Zeichenblöcken ermöglicht.

6. Vorrichtung nach Anspruch 5, dadurch gekennzeichnet, daß sie aufweist :

— zwei Sende-Empfangs-Schaltkreise (HDL0, HDL1), die je einer Verbindung des verdoppelten Netzes (RIT) zugeordnet sind,

— zwei Gruppen von Sendepufferregistern (FT0, FT1, RT0, RT1),

— zwei Gruppen von Empfangspufferregistern (FR0, FR1, RR0, RR1),

— einen Steuerschaltkreis (DM), der in der Lage ist, mehrere unabhängige Kanäle zu bearbeiten, wobei die Vorrichtung zwei unabhängige Sendekanäle (VT0, VT1) und zwei unabhängige Empfangskanäle (VR0, VR1) bearbeitet.

FIG.1

# FIG.2

FIG.3

# FIG. 4

# FIG. 5

FIG.6

0 062 293

# FIG.7

FIG.8